# EUROPÄISCHE PATENTANMELDUNG

(11) **EP 2 432 016 A1**
(43) Veröffentlichungstag der Anmeldung: **21.03.2012**
(21) Anmeldenummer: 10192212.8
(22) Anmeldetag: 23.11.2010
(51) Int. Cl.: H01L 27/146, G01J 1/16

(54) **Verfahren und Vorrichtung zum Messen einer Belichtungsdifferenz**

(30) Priorität: 16.09.2010 US 383448 P
(71) Anmelder: SIEMENS AKTIENGESELLSCHAFT, 80333 München (DE)
(72) Erfinder: Schick, Anton, 84149, Velden (DE); Wever, Utz, 81539, München (DE); Zhou, Yayun, 81735, München (DE)

(57) **Zusammenfassung**

Vorrichtung (1) und Verfahren zur Erfassung einer Belichtungsdifferenz mit: mindestens zwei benachbarten photoelektrischen Sensorelementgruppen (2, 3), auf die während einer einstellbaren Belichtungszeit Licht fällt, das jeweils in eine elektrische Ladungsmenge umgewandelt wird, welche der Lichtmenge des während der Belichtungszeit auf die jeweilige Sensorelementgruppe fallenden Lichtes entspricht; und mit einem Detektor (4), welcher ein Ladungsminimum der von den beiden photoelektrischen Sensorelementgruppen generierten Ladungsmengen detektiert und von beiden photoelektrischen Sensorelementgruppen subtrahiert.

Die erfindungsgemäße Vorrichtung und Verfahren ist vielseitig anwendbar, insbesondere bei Digitalkameras und für Medizingeräte. Wavelet-Koeffizienten können unmittelbar messtechnisch bzw. sensorisch erzeugt werden und stehen zur weiteren Signalverarbeitung zur Verfugung.

## Beschreibung

Die Erfindung betrifft ein Verfahren und eine Vorrichtung zum Messen einer Belichtungsdifferenz, insbesondere für eine digitale Kamera.

Bei herkömmlichen bildgebenden Einrichtungen wird in jedem lichtempfindlichen Sensorelement bzw. jedem Pixel die durch das jeweilige lichtempfindliche Sensorelement empfangene Lichtmenge, d.h. die Zahl der dort auftreffenden Lichtphotonen, in elektrische Ladungen konvertiert und ein entsprechender Spannungswert ausgegeben. Bei diesen herkömmlichen Vorrichtungen werden somit Absolutwerte der empfangenen Lichtmengen e-fasst und anschließend durch eine Signalverarbeitungsschaltung weiterverarbeitet. Beispielsweise werden die erfassten Absolutwert per Hardware oder Software zur Weiterverarbeitung in sogenannte Wavelet-Koeffizienten transformiert. Dabei erfolgt eine Differenzbildung der sensorisch erfassten Lichtintensitäts- bzw. Spannungswert zwischen benachbarten Sensorelementen oder Sensorelementgruppen.

Ein Nachteil dieser konventionellen Anordnung besteht somit darin, dass ein zusätzlicher prozesstechnischer Signalverarbeitungsschritt erforderlich ist, um die für viele Anwendungen notwendig Differenzbildung zur Ermittlung einer Belichtungsdifferenz zwischen photoelektrischen Sensorelementen bzw. photoelektrischen Sensorelementgruppen durchzuführen.

Ein weiterer Nachteil dieser konventionellen Anordnung besteht darin, dass Sättigungseffekte, die bei einer Überbelichtung von Sensorelementen auftreten, nicht korrigiert werden können.

Es ist daher eine Aufgabe der vorliegenden Erfindung, ein Verfahren und eine Vorrichtung zu schaffen, die es erlauben, eine Belichtungsdifferenz direkt zu messen.

Diese Aufgabe wird erfindungsgemäß durch ein Verfahren mit den in Patentanspruch 1 angegebenen Merkmalen gelöst.

Die Erfindung schafft ein Verfahren zur Messung einer Belichtungsdifferenz mit den Schritten: Belichten von mindestens zwei benachbarten photoelektrischen Sensorelementgruppen mit Licht während einer Belichtungszeit, die das Licht jeweils in eine elektrische Ladungsmenge umwandeln, welche der Lichtmenge des während der Belichtungszeit auf die jeweilige Sensorelementgruppe fallenden Lichtes entspricht; und Entladen beider benachbarter photoelektrischer Sensorelementgruppen während der Belichtungszeit derart, dass diejenige der beiden photoelektrischen Sensorelementgruppen, auf die Licht mit einer geringeren Lichtintensität fällt als auf die andere der beiden photoelektrischen Sensorelementgruppen, keine elektrische Ladung aufweist und die andere der beiden photoelektrischen Sensorelementgruppen eine elektrische Ladungsmenge aufweist, welche der Belichtungsdifferenz zwischen den auf die beiden benachbarten Sensorelementgruppen fallenden Lichtmengen entspricht.

Bei dem erfindungsgemäßen Verfahren werden somit Belichtungsdifferenzen zwischen zwei benachbarten photoelektrischen Sensorelementgruppen, welche jeweils mindestens aus einem Sensorelement bestehen, direkt gemessen und als Signal ausgegeben. Dieses ausgegebene Signal entspricht nach durchgeführter Analog-Digitalumwandlung einem Wavelet-Koeffizienten, der unmittelbar in einer Datenverarbeitungseinrichtung verarbeitet werden kann. Bei dem erfindungsgemäßen Verfahren wird somit die Differenzbildung unmittelbar auf einem Sensorchip durchgerührt, welche die photoelektrischen Sensorelementgruppen aufweist (Active Pixel Sensor).

Bei einer möglichen Ausführungsform des erfindungsgemäßen Verfahrens werden die beiden benachbarten photoelektrischen Sensorelementgruppen gleichzeitig während der Belichtungszeit kontinuierlich mit dem gleichen Ladungswert entladen.

Bei einer weiteren möglichen alternativen Ausführungsform des erfindungsgemäßen Verfahrens werden die beiden benachbarten photoelektrischen Sensorelementgruppen gleichzeitig nährend der Belichtungszeit diskontinuierlich entlade.

Bei einer möglichen Ausführungsform des erfindungsgemäßen Verfahrens wird derjenigen der beiden benachbarten photoelektrischen Sensorelementgruppen, auf die Licht mit einer höheren Lichtintensität während der Belichtungszeit fällt, regelmäßig in vorbestimmten Zeitintervallen zur Vermeidung einer Sättigung der photoelektrischen Sensorelementgruppe elektrische Ladungsanteile entnommen.

Bei einer möglichen Ausführungsform werden die entnommenen elektrischen Ladungsanteile zu einer elektrischen Ladungsmenge aufsummiert, welche der Belichtungsdifferenz zwischen der auf die beiden benachbarten Sensorelementgruppen fallenden Lichtmengen entspricht.

Bei einer möglichen Ausführungsform des erfindungsgemäßen Verfahrens weist jede photoelektrische Sensorelementgruppe 2.2²ⁿ aneinandergrenzende photoelektrische Sensorelemente eines Sensorelementfeldes auf, wobei n eine ganze Zahl n≥0 ist.

Bei einer möglichen Ausführungsform des erfindungsgemäßen Verfahrens werden mehrere photoelektrische Sensorelemente des Sensorelementfeldes zu einer photoelektrischen Sensorelementgruppe vor dem Belichten zusammengeschaltet.

Bei einer möglichen Ausführungsform des erfindungsgemäßen Verfahrens bestehen die photoelektrischen Sensorelementgruppen aus CMOS-Sensorelementen.

Bei einer möglichen Ausführungsform des erfindungsgemäßen Verfahrens werden die beiden benachbarten photoelektrischen Sensorelementgruppen nach Ablauf der Belichtungszeit zur Signalauswertung ausgelesen.

Bei einer weiteren möglichen Ausführungsform des erfindungsgemäßen Verfahrens wird die generierte elektrische Ladungsmenge, welche der Belichtungsdifferenz zwischen den auf die beiden benachbarten Sensorelementgruppen fallenden Lichtmengen entspricht, aus derjenigen der beiden benachbarten Sensorelementgruppen, auf die Licht mit einer höheren Lichtintensität während der Belichtungszeit fällt, ausgelesen, und entspricht einem Wavelet-Koeffizienten.

Bei einer möglichen Ausführungsform des erfindungsgemäßen Verfahrens sind die photoelektrischen Sensorelemente der Sensorelementgruppen für elektromagnetische Strahlung in einem vorbestimmten Frequenzbereich empfindlich.

Die Erfindung schafft ferner eine Vorrichtung zur Erfassung einer Belichtungsdifferenz mit: mindestens zwei benachbarten photoelektrischen Sensorelementgruppen, auf die während einer einstellbaren Belichtungszeit Licht fällt, das jeweils in eine elektrische Ladungsmenge umgewandelt wird, welche der Lichtmenge des während der Belichtungszeit auf die jeweilige Sensorelementgruppe fallenden Lichtes entspricht; und mit einem Detektor, welcher ein Ladungsminimum der von den beiden photoelektrischen Sensorelementgruppen generierten Ladungsmengen detektiert und von beiden photoelektrischen Sensorelementgruppen subtrahiert.

Bei einer Ausführungsform der erfindungsgemäßen Vorrichtung weist diese eine Auslesesehaltung auf, die die photoelektrischen Sensorelementgruppen nach Ablauf der Belichtungszeit zur Signalauswertung an eine Signalauswertungsschaltung ausliest, wobei die Auslesesehaltung der Signalauswerteschaltung vorzugsweise eine Ladungsdifferenz und ein Vorzeichen dieser Ladugsdifferenz meldet bzw. übermittelt.

Bei einer möglichen Ausführungsform der erfindungsgemäßen Vorrichtung weisen die photoelektrischen Sensorelementgruppen jeweils 2.2²ⁿ aneinander grenzende photoelektrische Sensorelemente eines Sensorelementfeldes auf, wobei n eine ganze Zahl n≥0 ist.

Bei einer weiteren möglichen Ausführungsform der erfindungsgemäßen Vorrichtung ist eine Steuerschaltung vorgesehen, die mehrere photoelektrische Sensorelemente zu einer Sensorelementgruppe vor Beginn der Belichtungszeit zusammenschaltet.

Bei einer weiteren möglichen Ausführungsform der erfindungsgemäßen Vorrichtung sind mehrere Sensorelementfelder übereinander angeordnet.

Bei einer möglichen Ausführungsform sind mehrere Sensorelementfelder nebeneinander angeordnet und es ist davor ein Strahlungsteiler zur Bildvervielfältigung vorgesehen.

Die Erfindung schafft ferner eine digitale Kamera mit einer Vorrichtung zur Erfassung einer Belichtungsdifferenz mit: mindestens zwei benachbarten photoelektrischen Sensorelementgruppen, auf die während einer einstellbaren Belichtungszeit Licht fällt, das jeweils in eine elektrische Ladungsmenge umgewandelt wird, welche der Lichtmenge des während der Belichtungszeit auf die jeweilige Sensorelementgruppe fallenden Lichtes entspricht; und mit einem Detektor, welcher ein Ladungsminimum der von den beiden photoelektrischen Sensorelementgruppen generierten Ladungsmengen detektiert und von beiden photoelektrischen Sensorelementgruppen subtrahiert.

Des Weiteren werden mögliche Ausführungsformen der erfindungsgemäßen Vorrichtung und des erfindungsgemäßen Verfahrens zur Erfassung einer Belichtungsdifferenz unter Bezugnahme auf die beigefügten Figuren näher erläutert.

Es zeigen:
Figur 1 ein Blockschaltbild einer möglichen Ausführungsform der erfindungsgemäßen Vorrichtung zur Erfassung einer Belichtungsdifferenz;
Figur 2 ein einfaches Ablaufdiagramm einer möglichen Ausführungsform des erfindungsgemäßen Verfahrens zur Messung einer Belichtungsdifferenz;
Figur 3 ein Signaldiagramm zur Erläuterung der Funktionsweise des erfindungsgemäßen Verfahrens und der erfindungsgemäßen Vorrichtung zur Erfassung einer Belichtungsdifferenz gemäß einer ersten Ausführungsvariante;
Figur 4 ein Signaldiagramm zur Erläuterung einer Problematik, die einer zweiten Ausführungsvariante des erfindungsgemäßen Verfahrens und der erfindungsgemäßen Vorrichtung zur Erfassung einer Belichtungsdifferenz zu Grunde liegt;
Figur 5 ein Signaldiagramm zur Erläuterung der Funktionsweise einer zweiten Ausführungsvariante des erfindungsgemäßen Verfahrens und der erfindungsgemäßen Vorrichtung zur Erfassung einer Belichtungsdifferenz.

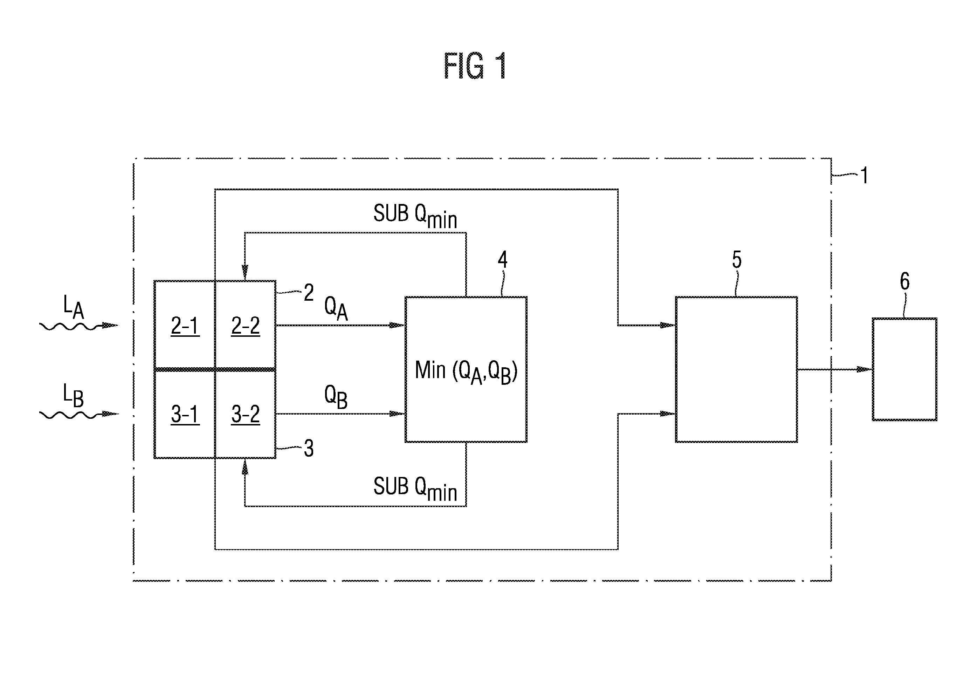

Wie man aus Figur 1 erkennen kann, weist eine erfindungsgemäße Vorrichtung 1 gemäß dem dort dargestellten Ausführungsbeispiel mindestens zwei benachbarte photoelektrische Sensorelementgruppen 2, 3 auf, die jeweils aus mehreren photoelektrischen Sensorelementen 2-i, 3-i bestehen. In dem in Figur 1 dargestellten Ausführungsbeispiel weist jede der beiden benachbarten photoelektrischen Sensorelementgruppen 2, 3 zwei photoelektrische Sensorelemente 2-1, 2-2 bzw. 3-1, 3-2 auf. Allgemein weist jede photoelektrische Sensorelementgruppe 2, 3 zur Ermittlung von Wavelet-Koeffizienten jeweils 2.2²ⁿ aneinander grenzende photoelektrische Sensorelemente eines Sensorelementfeldes auf, wobei n eine ganze Zahl n≥0 ist, d.h. 2, 8 usw. Sensorelemente. Dementsprechend weist jede Sensorelementgruppe 2, 3 bei dieser Ausführungsform zur direkten Erzeugung von Wavelet-Koeffizienten mindestens zwei photoelektrische Sensorelemente auf. Bei alternativen Ausführungsformen kann eine Sensorelementgruppe 2, 3 für andere Anwendungsfälle auch aus mindestens einem Sensorelement bzw.. Pixel bestehen. Auf die beiden benachbarten photoelektrischen Sensorelementgruppen 2, 3 fällt jeweils während einer einstellbaren Belichtungszeit T_{B} Licht. Bei dem in Figur 1 dargestellten Beispiel fällt auf die erste photoelektrische Sensorelementgruppe 2 eine Lichtmenge L_{A} und auf die zweite photoelektrische Sensorelementgruppe 3 eine Lichtmenge L_{B}. Das auf die jeweilige photoelektrische Sensorelementgruppe 2, 3 fallende Licht wird jeweils durch die zugehörige photoelektrische Sensorelementgruppe 2, 3 in eine entsprechende elektrische Ladungsmenge Q_{A}, Q_{B} umgewandelt. Diese elektrische Ladungsmenge Q_{A}, Q_{B} entspricht der Lichtmenge L_{A}, L_{B} des während der Belichtungszeit T_{B} auf die jeweilige Sensorelementgruppe 2, 3 fallenden Lichtes. Die Vorrichtung 1 weist ferner einen Detektor 4 auf, welcher ein Ladungsminimum Qmin der von den beiden photoelektrischen Sensorelementgruppen 2, 3 generierten Ladungsmengen Q_{A}., Q_{B} detektiert und von den beiden photoelektrischen Sensorelementgruppen 2, 3 jeweils subtrahiert.

Weiterhin ist in der Vorrichtung 1 bei der in Figur 1 dargestellten Ausführungsform eine Ausleseschaltung 5 vorgesehen, welche die photoelektrischen Sensorelementgruppen 2, 3 nach Ablauf der Belichtungszeit T_{B} zu ihrer Signalauswertung an eine Signalauswerteschaltung 6 ausliest.

Bei dem in Figur 1 dargestellten Ausführungsbeispiel ist die Ausleseschaltung 5 in der Vorrichtung 1 zur Erfassung der Belichtungsdifferenz integriert. Bei einer alternativen Ausführungsform weist die Vorrichtung 1 zur Erfassung einer Belichtungsdifferenz nur die photoelektrischen Sensorelementgruppen und den Detektor 4 auf.

Bei einer weiteren Ausführungsform der erfindungsgemäßen Vorrichtung 1 ist zusätzlich eine (nicht in Figur 1 dargestellte) Steuerschaltung vorgesehen, die mehrere photoelektrische Sensorelemente zu einer Sensorelementgruppe 2, 3 vor Beginn der Belichtungszeit zusammenschaltet. Die Größe bzw. Umfang der Sensorelementgruppen 2, 3 kann durch die Steuerschaltung eingestellt werden, wobei die in Figur 1 dargestellten photoelektrischen Sensorelemente 2-i, 3-i einen Teil eines größeren Sensorelementfeldes mit einer Vielzahl von photoelektrischen Sensorelementen bilden können.

Bei einer weiteren möglichen Ausführungsform besteht dieses Sensorelement feld aus einer Vielzahl von photoelektrisch empfindlichen CMOS-Sensorelementen. Bei der in Figur 1 dargestellten Ausführungsform weist die Vorrichtung 1 ein Sensorelementfeld auf. In einer alternative Ausführungsform kann die Vorrichtung 1 auch mehrere übereinander angeordnete Sensorelementfelder besitzen. Weiterhin ist es möglich, mehrere Sensorelementfelder nebeneinander anzuordnen und einen Strahlungsteiler zur Bildvervielfältigung vorzusehen. Die Fläche der Pixel bzw. Sensorelemente kann variieren. Ferner kann die Zahl der zusammengeschaltenen Sensorelemente angepasst bzw. gesteuert werden. Bei einer möglichen Ausführungsform erfolgt diese Anpassung dynamisch, z.B. in Abhängigkeit der Lichtintensität .

Bei einer möglichen Ausführungsform der erfindungsgemäßen Vorrichtung 1 sind die photoelektrischen Sensorelemente des Sensorelement feldes für elektromagnetische Strahlung in einem vorbestimmten Frequenzbereich ΔF empfindlich. Beispielsweise sind die photoelektrischen Sensorelemente für Licht in einem sichtbaren Bereich empfindlich. In einer alternativen Ausführungsform sind die Sensorelementfelder für andere Frequenzbereiche empfindlich, beispielsweise für Ultraviolettstrahlung oder Infrarotstrahlung. Bei einer weiteren möglichen Ausführungsform sind die photoelektrischen Sensorelemente beispielsweise für Röntgenstrahlung empfindlich.

Bei einer weiteren möglichen Ausführungsform sind mehrere Sensorelementfelder, die übereinander angeordnet sind, für elektromagnetische Strahlung in dem gleichen Frequenzbereich empfindlich. In einer alternative Ausführungsform sind übereinander angeordnete Sensorelementfelder für elektromagnetische Strahlung in unterschiedlichen Frequenzbereichen empfindlich.

Bei einer möglichen Ausführungsform ist die in Figur 1. dargestellte Vorrichtung zum Messen einer Belichtungsdifferenz in eine Digitalkamera integriert. Bei einer alternative Ausführungsform ist die in Figur 1 dargestellte Ausführungsform beispielsweise in einem Röntgendetektor oder einem Computertomographen vorgesehen.

Bei der in Figur 1 dargestellten Vorrichtung 1 ist jedes photoelektrische Sensorelement bzw. jedes Pixel mit einem Sensorknoten verbunden, der die lokal erzeugte elektrische Ladung Q anliegenden Detektor 4 meldet. Die festgestellte geringere Ladung der beiden benachbarten Sensorelementgruppen 2, 3 wird von der aktuellen Ladung der beiden Sensorelementgruppen 2, 3 durch den Detektor 4 subtrahiert. Dies hat zur Folge, dass die aktuelle elektrische Ladung Q auf einer der beiden benachbarten Sensorelementgruppen 2, 3 stets null ist und die jeweils andere Sensorelementgruppe eine Ladung Q aufweist, die der Differenz zwischen den beiden auf die Sensorelementgruppen 2, 3 auffallenden Lichtmengen L_{A}, L_{B} entspricht. Diese Ladungsdifferenz ΔQ bzw. Lichtmengendifferenz wird durch eine Ausleseschaltung 5 nach Ablauf der Belichtungszeit T_{B} ausgelesen und an die Signalauswerteschaltung 6 zur weiteren Signalauswertung abgegeben. Weiterhin meldet die Ausleseschaltung 5 das Vorzeichen der Ladungsdifferenz ΔQ an die Signalauswerteschaltung 6. Die Signalauswerteschaltung 6 kann beispielsweise einen Analog-Digitalwandler aufweisen, welcher die Ladungs- bzw. Lichtmengendifferenz in einen digitalen Wert umwandelt, welcher unmittelbar einem Wavelet-Koeffizienten entspricht. Die durch die erfindungsgemäße Vorrichtung 1 somit unmittelbar erzeugten Wavelet-Koeffizienten können dann direkt elektronisch weiterverarbeitet werden, beispielsweise zur Signalkompression, zum Entrauschen und Nachschärfung. Weiterhin ist es möglich, die aufgenommenen Wavelet-Koeffizienten mit einer inversen Wavelet-Transformation in Realdaten zurückzutransformieren.

Die erfindungsgemäße Vorrichtung 1 zur Erfassung einer Belichtungsdifferenz eignet sich insbesondere auch für inkohärentes Licht, beispielsweise Sonnenlicht.

Die erfindungsgemäße Vorrichtung 1. wird verwendet, um Wavelet-Koeffizienten eines Bildes zu messen. Die erfindungsgemäße Anordnung bietet einen erheblichen Dynamikgewinn für den gesamten Bildsensor, d.h. die Wavelet-Transformation auf dem Bildsensor stellt einen High Dynamic Range (HDR) Sensor dar.

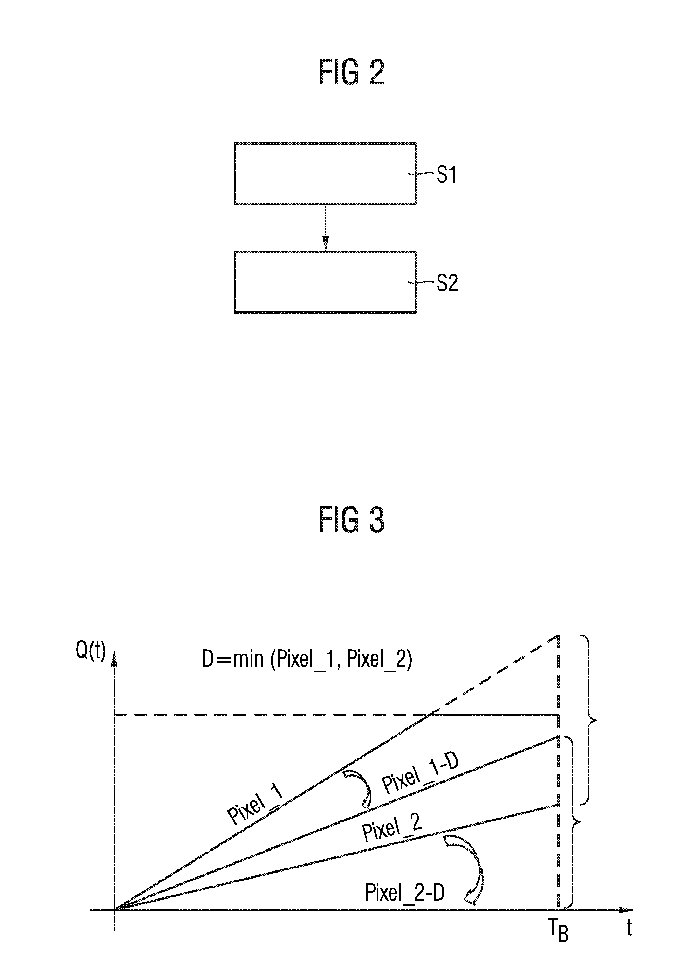

Figur 2 zeigt ein einfaches Ablaufdiagramm zur Darstellung eines Ausführungsbeispiels des erfindungsgemäßen Verfahrens zur Messung einer Belichtungsdifferenz.

In einem ersten Schritt S1 erfolgt ein Belichten von mindestens zwei benachbarten photoelektrischen Sensorelementgruppen 2, 3 mit Licht während einer Belichtungszeit T_{B}. Bei einer möglichen Ausführungsform ist die Belichtungszeit T_{B} einstellbar.

Bei einer möglichen Ausführungsform werden die Sensorelemente während der Belichtungszeit T_{B} aktiv auf lichtempfindlich geschaltet und nach Ablauf der Belichtungszeit T_{B} wieder deaktiviert. Dies kann mit Hilfe einer Steuerschaltung geschehen, die über einen Zeitgeber bzw. Timer verfügt.

Bei einer alternativen Ausführungsform wird die Belichtungszeit T_{B} durch Ansteuern einer vor dem Sensorfeld befindlichen Blende gesteuert, die während der Belichtungszeit geöffnet wird.

Die beiden benachbarten Photoelementgruppen 2, 3 wandeln das auftretende Licht jeweils in Schritt S1 in eine elektrische Ladungsmenge Q_{A}, QB um, welche der Lichtmenge L_{A}, L_{B} des während der Belichtungszeit T_{B} auf die jeweilige Sensorelementgruppe 2, 3 fallenden Lichtes L entspricht. Noch während der Belichtungszeit T_{B} erfolgt im Schritt S2 ein Entladen beider benachbarter photoelektrischer Sensorelementgruppen 2, 3 derart, dass diejenige der beiden photoelektrischen Sensorelementgruppen 2, 3, auf die Licht mit einer geringeren Lichtintensität fällt, als auf die andere der beiden photoelektrischen Sensorelementgruippen, keine elektrische Ladung (Q=0) aufweist, und die andere der beiden photoelektrischen Sensorelementgruppen 2, 3 eine elektrische Ladungsmenge Q aufweist, welche der Belichtungsdifferenz ΔL zwischen den auf die beiden benachbarten Sensorelementgruppen 2, 3 fallenden Lichtmengen L_{A}, L_{B} entspricht (ΔL=|L_{A}-L_{B}|) bzw. dazu proportional ist (Q∼ΔL).

Das Entladen der beiden benachbarten photoelektrischen Sensorelementgruppen 2, 3 während der Belichtungszeit T_{B} kann dabei bei einer möglichen Ausführungsform kontinuierlich erfolgen. Bei einer alternativen Ausführungsform erfolgt das gleichzeitige Entladen der beiden benachbarten photoelektrischen Sensorelementgruppen 2, 3 während der Belichtungszeit T_{B} diskontinuierlich.

Figur 3 zeigt ein Signaldiagramm zur weiteren Erläuterung der Funktionsweise des erfindungsgemäßen Verfahrens und der erfindungsgemäßen Vorrichtung 1 zum Messen einer Belichtungdifferenz. Wie man aus Figur 3 entnehmen kann, wird die durch Belichtung erzeugte elektrische Ladung Q über der Zeit t dargestellt. Dabei ist der Ladungsverlauf für zwei benachbarte photoelektrische Sensorelemente Pixel 1, Pixel 2 für eine Belichtungszeit T_{B} dargestellt. Der in Figur 3 dargestellte lineare Verlauf ist beispielhaft, d.h. Ladungszunahme während der Belichtungszeit T_{B} muss nicht zwingend linear erfolgen. Bei dem in Figur 3 dargestellten Beispiel fällt auf das erste Pixel 1 eine größere Lichtmenge als auf das zweite benachbarte Pixel 2, so dass die hierdurch generierte Ladung Q(t) zunimmt, bis das erste Pixel 1 in dem dargestellten Beispiel eine Sättigungsgrenze erreicht. Bei dem erfindungsgemäßen Verfahren wird diesem stärker belichteten ersten Pixel 1 ständig diejenige Ladungsmenge entzogen, die durch das zweite, schwächer belichtete Pixel 2 generiert wird. Wie man aus Figur 3 entnehmen kann, wird bei dem dargestellten Beispiel hierdurch erreicht, dass das erste Pixel 1 während der Belichtungszeit T_{B} nicht die Sättigungsgrenze erreicht, und somit die gemessene Belichtungsdifferenz am Ende der Belichtungszeit T_{B} der tatsächlichen Lichtmengendifferenz entspricht.

In dem erfindungsgemäßen Verfahren werden somit die elektrischen Ladungen, d.h. die Elektronen, die durch die Lichtphotonen entstehen, gleichzeitig beiden Sensorelementen bzw. Sensorelementgruppen Pixel 1, Pixel 2 entzogen, um die Ladungsmenge der schwächer belichteten Sensorelementgruppe bei null zu halten. Die durch die stärker belichtete Sensorelementgruppe erzeugte elektrische Ladung Q wird nach Ablauf der Belichtungszeit ausgelesen und entspricht genau der Lichtmengendifferenz ΔL. Wie man aus Fig. 3 unmittelbar erkennen kann, weist das erfindungsgemäße Verfahren und die erfindungsgemäße Vorrichtung 1 zum Messen einer Belichtungsdifferenz den Vorteil auf, dass in vielen Fällen eine Sättigung einer elektrischen Sensorelementgruppe und somit eine Verzerrung der gemessenen Differenz verhindert werden kann.

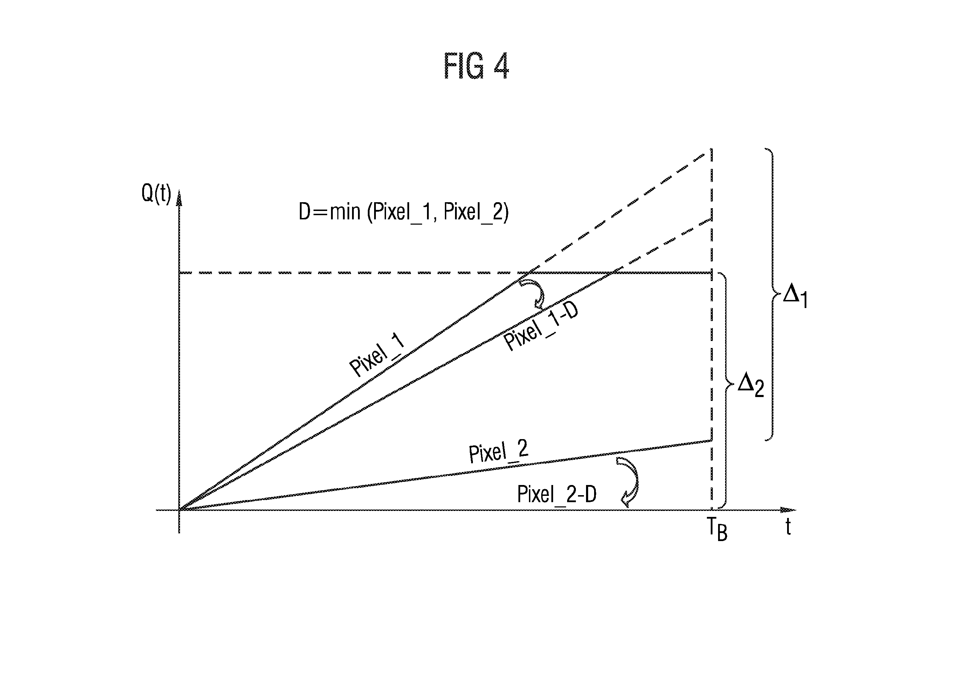

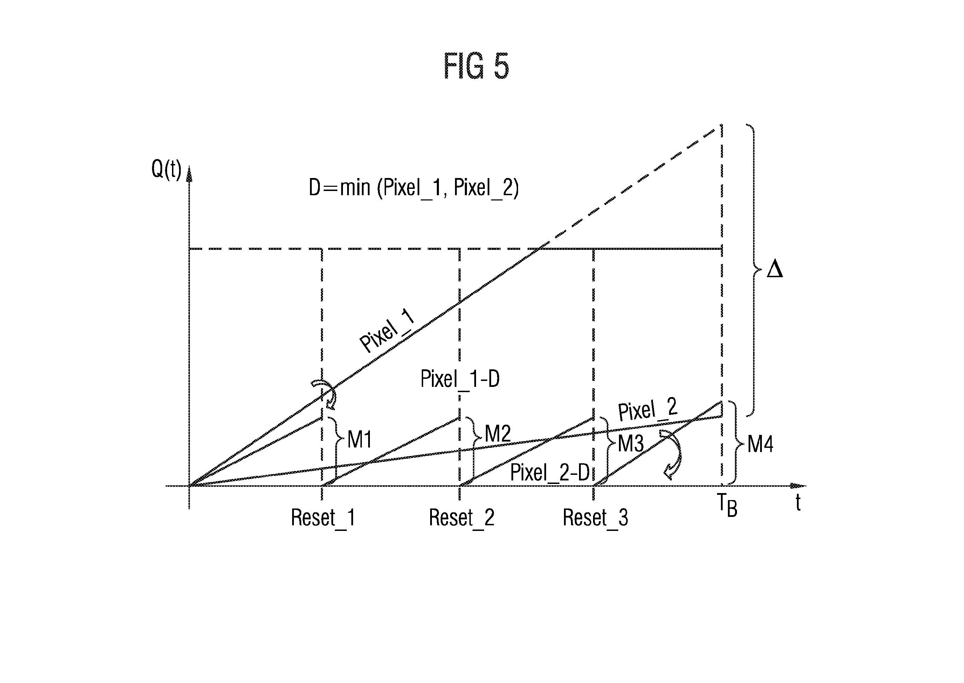

Allerdings kann, wie in Figur 4 dargestellt, bei einer entsprechend langen Belichtungszeit T_{B} bzw. bei einer hohen Lichtintensität der Fall auftreten, dass es zu einer Sättigung der stärker belichteten der beiden benachbarten photoelektrischen Sensorelementgruppen 2, 3 kommen kann. Dadurch kommt es zu einer Verzerrung der gemessenen Differenz zu der tatsächlichen Lichtmengendifferenz ΔL. Das wird bei einer möglichen Ausführungsvariante des erfindungsgemäßen Verfahrens durch regelmäßige Entladung der stärker belichteten Sensorelementgruppe, wie in Figur 5 dargestellt, verhindert. Dabei werden derjenigen der beiden benachbarten photoelektrischen Sensorelementgruppen 2, 3, auf die Licht mit einer hinheren Lichtintensität, während der Belichtungszeit T_{B} fällt, regelmäßig in vorbestimmten Zeitintervallen Δt zur Vermeidung einer Sättigung der stärker belichteten photoelektrischen Sensorelementgruppe elektrische Ladungsanteile entnommen. Auf diese Weise kann eine Sättigung der stärker belichteten photoelektrischen Sensorelementgruppe, d.h. Pixel 1 bei dem in Figur 5 dargestellten Ausführungsbeispiel, verhindert werden. Die entnommenen elektrischen Ladungsanteile Mᵢ werden zu einer elektrischen Ladungsmenge aufsummiert, welche der Belichtungsdifferenz ΔL zwischen dem auf die beiden benachbarten Sensorelementgruppen 2, 3 fallenden Lichtmengen L_{A}, L_{B} entspricht. In einer möglichen Ausführungsform sind die vorbestimmten Zeitintervalle Δt zur Entnahme der elektrischen Ladungsanteile einstellbar . Bei dem in Figur 5 dargestellten Ausführungsbeispiel wird die Belichtungszeit T_{E} in vier Zeitintervalle zur Entnahme von Ladungsanteilen unterteil. Bei dem in Figur 5 dargestellten Ausführungsbeispiel sind die Zeitintervalle Δt zur Entnahme von elektrischen Ladungsanteilen gleich groß. In weiteren möglichen Ausführungsvarianten können sich die Zeitintervalle Δt zur Entnahme von Ladungsanteilen auch unterscheiden. Je kürzer die Zeitintervalle Δt zur Entnahme von elektrischen Ladungsanteilen eingestellt sind, desto geringer ist die Wahrscheinlichkeit, dass eine der beiden elektrischen Sensorelementgruppen 2, 3 bzw. Pixel 1, Pixel 2 in Sättigung kommt. Diese Ausführungsvariante verhindert insbesondere, dass bei einer hohen Lichtintensität eine Sensorelementgruppe bzw. Sensorelemente übersteuert. Bei einer weiteren möglichen Ausführungsvariante wird bei Erreichen der Sättigungsgrenze automatisch eine Entladung dieser Sensorelementgruppe herbeigeführt bzw. getriggert, um eine Übersättigung der jeweiligen Sensorelementgruppe zu verhindern. Bei dieser Ausführungsform wird somit die erzeugte Ladung überwacht und mit einem Schwellenwert verglichen.

Das erfindungsgemäße Verfahren bzw. die erfindungsgemäße Vorrichtung 1 zur Messung einer Belichtungsdifferenz stellt einen beliebig hohen Dynamikbereich bzw. Kontrastumfang bereit. Hierbei kann die gleiche Hardware für unterschiedliche Umgebungen eingesetzt werden. Das erfindungsgemäße Verfahren bzw. die erfindungsgemäße Vorrichtung 1 erlauben eine On-Chip Datenkompression und sparen somit Speicherplatz. Höhere Frequenzen bzw. Ortsfrequenzen von einer Struktur, die durch die Kamera aufgenommen wird, beispielsweise ein Gitter, können bei der Aufnahme unterdrückt bzw. eliminiert werden. Bei einer möglichen Ausführungsform erfolgt eine Detektion des Ladestromes der Pixelkapazitäten und eine entsprechende Regelung des Stromes. Bei einer alternativen Ausführungsform erfolgt eine Detektion der Spannung an dem Kondensator bzw. der Pixelkapazität und eine entsprechende Regelung der Spannung durch simultane Ladungsabführung.

Das erfindungsgemäße Verfahren bzw. die erfindungsgemäße Vorrichtung 1 zur Messung einer Belichtungsdifferenz eignet sich insbesondere in der Medizintechnik, beispielsweise für Röntgendetektoren oder Computertomographie. Weitere mögliche Einsatzgebiete sind Fernaufklärung, beispielsweise die Erzeugung von Satellitenbildern für Kartographie. Weiterhin eignet sich das erfindungsgemäße Verfahren und die erfindungsgemäße Vorrichtung 1 vor allem für Digitalkameras von Endverbrauchern.

## Patentansprüche

1. Verfahren zum Messen einer Belichtungsdifferenz mit den Schritten:
(a) Belichten (S1) von mindestens zwei benachbarten photoelektrischen Sensorelementgruppen (2, 3) mit Licht während einer Belichtungszeit (T_{E}), die das Licht jeweils in eine elektrische Ladungsmenge (Q_{A}., Q_{B}) umwandeln, welche der Lichtmenge (L_{A}, L_{B}) des während der Belichtungszeit (T_{B}) auf die jeweilige Sensorelementgruppe (2, 3) fallenden Lichtes entspricht; und
(b) Entladen (S2) beider benachbarter photoelektrischer Sensorelementgruppen (2, 3) während der Belichtungszeit (T_{B}) derart, das diejenige der beiden photoelektrischen Sensorelementgruppen (2, 3), auf die Licht mit einer geringeren Lichtintensität fällt als auf die andere der beiden photoelektrischen Sensorelementgruppen (2, 3), keine elektrische Ladung aufweist und die andere der beiden photoelektrischen Sensorelementgruppen (2, 3) eine elektrische Ladungsmenge aufweist, welche der Belichtungsdifferenz zwischen den auf die beiden benachbarten Sensorelementgruppen (2, 3) fallenden Lichtmengen entspricht.

2. Verfahren nach Anspruch 1,
wobei die beiden benachbarten photoelektrischen Sensorelementgruppen (2, 3) gleichzeitig während der Belichtungszeit kontinuierlich oder diskontinuierlich mit dem gleichen Ladungswert entladen werden.

3. Verfahren nach Anspruch 1 oder 2,
wobei derjenigen der beiden benachbarten photoelektrischen Sensorelementgruppen (2, 3), auf die Licht mit einer höheren Lichtintensität während der Belichtungszeit (T_{B}) fällt, regelmäßig in vorbestimmten Zeitintervallen (Δt) zur Vermeidung einer Sättigung der photoelektrischen Sensorelementgruppe (2, 3) elektrische Ladungsanteile entnommen werden.

4. Verfahren nach Anspruch 3,
wobei die entnommenen elektrischen Ladungsanteile zu einer elektrischen Ladungsmenge aufsummiert werden, welche der Belichtungsdifferenz zwischen den auf die beiden benachbarten Sensorelementgruppen (2, 3) fallenden Lichtmengen entspricht.

5. Verfahren nach Anspruch 1 - 4,
wobei jede photoelektrische Sensorelementgruppe zur direkten Ermittlung von Wavelet-Koeffizienten 2·2²ⁿ aneinandergrenzende photoelektrische Sensorelemente eines Sensorelementfeldes aufweist, wobei n eine ganze Zahl n≥0 ist.

6. Verfahren nach Anspruch 5,
wobei mehrere photoelektrische Sensorelemente des Sensorelementfeldes zu einer photoelektrischen Sensorelementgruppe (2, 3) vor dem Belichten zusammengeschaltet werden.

7. Verfahren nach Anspruch 1 - 6,
wobei die photoelektrischen Sensorelementgruppen (2, 3) aus CMOS-Sensorelementen bestehen.

8. Verfahren nach Anspruch 1 - 7,
wobei die beiden benachbarten photoelektrischen Sensorelementgruppen (2, 3) nach Ablauf der Belichtungszeit (T_{B}) zur Signalauswertung ausgelesen werden.

9. Verfahren nach Anspruch 1 - 8,
wobei die generierten elektrische Ladungsmenge, welche der Belichtungsdifferenz zwischen den auf die beiden benachbarten Sensorelementgruppen (2, 3) fallenden Lichtmengen entspricht, aus derjenigen der beiden benachbarten Sensorelementgruppen (2, 3), auf die Licht mit einer höheren Lichtintensität während der Belichtungszeit fällt, ausgelesen wird und mit dem ausgelesenen Vorzeichen der Differenz einem Mavelet-Koeffizienten entspricht.

10. Verfahren nach Anspruch 1 - 9,
wobei die photoelektrischen Sensorelemente der Sensorelementgruppen (2, 3) für elektromagnetische Strahlung in einem vorbestimmten Frequenzbereich empfindlich sind.

11. Vorrichtung (1) zur Erfassung einer Belichtungsdifferenz mit:
(a) mindestens zwei benachbarten photoelektrischen Sensorelementgruppen (2, 3), auf die während einer einstellbaren Belichtungszeit (T_{B}) Licht fällt, das jeweils in eine elektrische Ladungsmenge (Q_{A}, Q_{B}) umgewandelt wird, welche der Lichtmenge (L_{A}, L_{B}) des während der Belichtungszeit (T_{B}) auf die jeweilige Sensorelementgruppe (2, 3) fallenden Lichtes entspricht; und mit
(b) einem Detektor (4), welche ein Ladungsminimum (Qmin) der von den beiden photoelektrischen Sensorelementgruppen (2, 3) generierten Ladungsmengen (Q_{A}, Q_{B}) detektiert und von beiden photoelektrischen Sensorelementgruppen (2, 3) subtrahiert.

12. Vorrichtung nach Anspruch 11,
wobei eine Ausleseschaltung (5) vorgesehen ist, welcher die photoelektrischen Sensorelementgruppen (2, 3) nach Ablauf der Belichtungszeit (T_{B}) zur Signalauswertung an eine Signalauswerteschaltung (6) ausliest.

13. Vorrichtung nach Anspruch 11 oder 12,
wobei die photoelektrischen Sensorelementgruppen (2, 3) zur direkten Ermittlung von Wavelet-Koeffizienten jeweils 2·2²ⁿ aneinandergrenzende photoelektrische Sensorelemente eines Sensorelementfeldes aufweisen, wobei n eine ganze Zahl n≥0 ist.

14. Vorrichtung nach Anspruch 11 - 13,
wobei eine Steuerschaltung vorgesehen ist, die mehrere photoelektrische Sensorelemente zu einer Sensorelementgruppe (2, 3) vor Beginn der Belichtungszeit (T_{B}) zusammenschaltet.

15. Vorrichtung nach Anspruch 11 - 14,
wobei ein Sensorelementfeld vorgesehen ist, dessen Sensorelemente sukzessive schaltbar belichtet werden, oder wobei mehrere Sensorelementfelder übereinander angeordnet sind, oder
wobei mehrere Sensorelementfelder übereinander oder nebeneinander angeordnet sind und ein Strahlungsteiler zur Bildvervielfältigung von den Sensorelementfeldern vorgesehen ist.

16. Digitale Kamera mit einer Vorrichtung nach einem der Ansprüche 11 - 15.
